# EUROPÄISCHE PATENTSCHRIFT

(11) **EP 1 054 841 B1**
(45) Veröffentlichungstag und Bekanntmachung des Hinweises auf die Patenterteilung: **03.05.2006**
(21) Anmeldenummer: 99965440.3
(22) Anmeldetag: 06.12.1999
(51) Int. Cl.: C03B 23/047

(54) **VERFAHREN ZUR HERSTELLUNG EINES ROHRES AUS GLASIGEM WERKSTOFF, INSBESONDERE AUS QUARZGLAS**
METHOD FOR PRODUCING A TUBE OF GLASSY MATERIAL, ESPECIALLY QUARTZ GLASS
PROCEDE DE FABRICATION D'UN TUBE EN MATERIAU VITREUX, EN PARTICULIER EN VERRE DE QUARTZ

(30) Priorität: 10.12.1998 DE 19856892
(43) Veröffentlichungstag der Anmeldung: 29.11.2000
(73) Patentinhaber: Heraeus Tenevo GmbH, 63450 Hanau (DE)
(72) Erfinder: GÄNSICKE, Frank, D-63607 Wächtersbach (DE); GANZ, Oliver, D-63486 Bruchköbel (DE); HAIN, Harald, D-63796 Kahl (DE); BOGDAHN, Thomas, D-63791 Karlstein (DE); HUMBACH, Oliver, D-63755 Alzenau-Michelbach (DE)
(74) Vertreter: Staudt, Armin Walter
(86) Internationale Anmeldenummer: PCT/EP1999/009513
(87) Internationale Veröffentlichungsnummer: WO 2000/034193

(56) Entgegenhaltungen:
- DE-A- 19 536 960
- DE-C- 3 913 875
- FR-A- 2 436 111
- NÖLLE G.: 'Technik der Glasherstellung', 1997, DT. VERLAG FÜR GRUNDSTOFFINDUSTRIE, STUTTGART * Seite 134 - Seite 137 *

## Beschreibung

Die vorliegende Erfindung betrifft ein Verfahren zur Herstellung eines Rohres aus Quarzglas durch Ziehen aus einem Halbzeug, bei dem das Verhältnis von Außendurchmesser (D_{Ha}) zu Innendurchmesser (D_{Hi}) kleiner ist als das Verhältnis von Außendurchmesser (D_{Ra}) zu Innendurchmesser (D_{Ri}) des zu ziehenden Rohres.

Eine Maßnahme zum Ziehen eines Halbzeuges zu einem Rohr, bei dem das Verhältnis von Außendurchmesser zu lnnehdurchmesser größer ist als das Verhältnis von Außendurchmesser zu Innendurchmesser beim Halbzeug ergibt sich aus dem Fachbuch "G. Nölle: Technik der Glasherstellung; Dt, Verl. Für Grundstoffindustrie, Stuttgart, 1997". Demnach ist der Druck im Inneren des Rohres auf einem Wert zu halten, der kleiner ist als der Druck, der auf die Außenseite des Rohres im Heizraum einwirkt.

Aus der EP-A1 394 640 ist ein Verfahren bekannt, bei dem Quarzglas oder hoch kieselsäurehaltige Gläser in Form eines Hohlzylinders als Halbzeug im Vertikalverfahren zu einem Rohr gezogen wird, wobei der Druck im Innenraum des Rohres höher ist als der Aüßendruck, d.h. derjenige Druck, der in der Heizzone auf die Außenseite des Halbzeugs und des Rohres einwirkt. Mit diesem Verfahren lassen sich nur Rohre herstellen, bei denen das Verhältnis von Außendurchmesser zu Innendurchmesser des Rohres höchstens dem Verhältnis von Außendurchmesser zu Innendurchmesser des hochzylindrischen Halbzeugs entspricht; im allgemeinen werden mit dem bekannten Verfahren jedoch Rohre erhalten, bei denen das Verhältnis von Außendurchmesser zu Innendurchmesser des Rohres kleiner ist als das Verhältnis von Außendurchmesser zu Innendurchmesser des Halbzeugs.

Weiterhin ist aus der EP-A1 259 877 die Herstellung von Kapillarrohren bekannt, d.h. solchen Rohren, die einen sehr geringen Innendurchmesser haben. Typischerweise ist darüberhinaus der Außendurchmesser dieser Kapillarrohre bis zu 5mal größer als der Innendurchmesser. Die Herstellung solcher Kapillarrohre erfolgt durch Anordnen mehrerer Glasrohre mit unterschiedlichen Durchmessern ineinander, wobei die einzelnen Innen- und Außendurchmesser dieser Glasrohre aneinander angepaßt sind. Nachdem diese Glasrohre ineinandergesteckt sind, wird die Anordnung erhitzt und die einzelnen Rohre werden miteinander unter Ziehen in Längsrichtung verschmolzen. Diese Verfahrensweise bedeutet allerdings, daß eine umfangreiche Vorratshaltung von Glasrohren verschiedener Innen- und Außendurchmesser erforderlich ist. Darüberhinaus erfordert die koaxiale Anordnung eine Halterung der Rohre an beiden Enden beim Ziehen und Verschmelzen mit hoher Präzision. Weiterhin müssen die einzelnen, vorgefertigten Glasrohre, die dann ineinandergesteckt werden, sehr präzise in ihren geometrischen Abmessungen hergestellt werden, um insbesondere ein gleichmäßiges Verbinden der einzelnen Rohre zu gewährleisten.

Ausgehend von dem vorstehend angegebenen Stand der Technik liegt der vorliegenden Erfindung die Aufgabe zugrunde, ein Ziehverfahren anzugeben, mittels dem ein breites Spektrum von hohlzylindrischen Halbzeugen zu Rohren mit größerem Verhältnis von Innen- und Außendurchmesser verarbeitet werden kann.

Gelöst wird die vorstehende Aufgabe, indem das hohlzylindrische Halbzeug im wesentlichen vertikal einer Heizzone zugeführt, darin erwärmt und werkzeugfrei zu dem Rohr unter Bildung eines Übergangsbereichs vom Halbzeug zum Rohr nach unten abgezogen wird, wobei Durchmesser und Wandstärke des Rohres fortlaufend gemessen und die gemessenen geometrischen Daten des Rohres zur Erzeugung eines Steuersignals verwendet werden, mit dessen Hilfe eine Druckdifferenz eingestellt wird zwischen dem Druck P₁ im Innenraum des Halbzeugs, des Übergangsbereichs und des Rohres, und dem Druck P₂ im Heizraum, der in der Heizzone wenigstens im Übergangsbereich vom Halbzeug zum Rohr und dem ihm benachbarten Rohrbereich geregelt wird, wobei das dem Halbzeug abgewandte Ende des Rohrs während seiner Herstellung verschlossen gehalten wird, und der Druck P₁ im Innenraum des Übergangsbereichs, des Halbzeugs und des Rohres durch geregelte Zufuhr eines Gasstroms in den Innenraum des Halbzeugs, des Übergangsbereichs und des Rohres und mittels einer Saugpumpe auf einem vorberechneten Wert gehalten wird, der kleiner ist als der Wert des Drucks P₂ im Heizraum.

Durch die definierten Einstellungen des Drucks P₁ im Inneren des Halbzeugs bzw. des Rohres und des Drucks P₂ auf deren Außenseite und Regelung durch Soll-Ist-Abgleich ist es möglich, das Verhältnis des Außendurchmessers zum Innendurchmesser des herzustellenden Rohres in einem weiten Bereich einzustellen. Insbesondere erlaubt das erfindungsgemäße Verfahren auch die Herstellung von Rohren, bei denen das Verhältnis von Wandstärke zu Außendurchmesser größer ist als beim Halbzeug. Dadurch wird die Einsatzmöglichkeit vorhandener Halbzeuge zur Rohrherstellung wesentlich erweitert und so die Flexibilität und Wirtschaftlichkeit bestehender Rohrziehanlagen erhöht.

Zur Einstellung des Drucks P₁ wird das dem Halbzeug abgewandte Ende des Rohres während seiner Herstellung verschlossen gehalten. Hierbei wird dann der Druck P₁ im Inneren des Rohres durch Zufuhr eines Gasstroms, der in das Innere des Halbzeugs, des Übergangsbereichs und des Rohres eingeleitet wird, eingestellt und mittels einer Saugpumpe auf einem vorberechneten Wert gehalten. Dadurch kann ein definierter Unterdruck im Rohr aufrechterhalten und definiert eingestellt werden.

Es hat sich gezeigt, daß die Qualität eines Rohres stark von Druckschwankungen im Inneren des Rohres, auch wenn diese nur geringfügig sind, beeinflußt werden können. Um diesen Druckschwankungen entgegenzuwirken, wird in einer weiteren Ausbildung des Verfahrens der Gasstrom vor seiner Einleitung in das Halbzeug zunächst einem als Puffer dienenden Behälter zugeführt, der zwischen Saugpumpe und dem Innenraum des Rohres eingefügt ist.

Weiterhin hat es sich als vorteilhaft erwiesen, in den Innenraum des Halbzeugs und des Rohres ein Inertgas einzuleiten. Inertgas bringt den Vorteil, daß bei Kontakt mit heißen Teilen, eventuell auch mit heißen Ofenteilen, Oxidationen vermieden werden.

Insbesondere dann, wenn der Druck P₁ im Innenraum des Rohres und des Halbzeugs auf einem Wert gehalten wird, der 5 mbar bis 200 mbar kleiner ist als der Wert des Drucks P₂ im Heizraum, wird erreicht, daß Halbzeuge verarbeitet werden können, bei denen das Verhältnis von Halbzeugaußendurchmesser (D_{Ha}) zu Halbzeuginnendurchmesser (D_{Hi}) im Bereich von 1,5 bis 4,5 liegt, also in einem sehr weiten Bereich.

Das Verfahren gestaltet sich sehr einfach, wenn der Druck P₂ im Heizraum etwa Atmosphärendruck beträgt.

Es besteht die Möglichkeit, während der Herstellung des Rohres aus dem Halbzeug auf den Innen- und Außendurchmesser des herzustellenden Rohres Einfluß zu nehmen, indem dann, wenn eine Abweichung des Verhältnisses D_{Ra} zu D_{Riᵢ} von einem vorgegebenen Sollwert auftritt, ein Steuersignal erzeugt und mit diesem ein der Saugpumpe vorgeschaltetes Ventil angesteuert und solange geschlossen wird, bis der Sollwert wieder erreicht ist. Nach Erreichen des Sollwerts wird das Ventil wieder geöffnet. Dieser Regelvorgang wird ständig wiederholt, um das herzustellende Rohr in vorgegebenen Sollwertgrenzen in Bezug auf seinen Innen- und Außendurchmesser zu halten. Hier wird vorteilhafterweise unmittelbar, in Ziehrichtung des Rohres gesehen, nach dem Übergangsbereich also noch im Heizraum, eine Durchmesser-Messung (Außen- und Innendurchmesser) des Rohres vorgenommen und diese geometrischen Daten zur Erzeugung des Steuersignals zur Regelung der Druckdifferenz verwendet.

Es hat sich gezeigt, daß sich das angegebene Verfahren besonders zur Herstellung von Rohren eignet, bei denen das Verhältnis (D_{Ra}/D_{Ri}) von Rohraußendurchmesser zu Rohrinnendurchmesser größer als 1,5 ist; vorzugsweise soll darüberhinaus dieses Verhältnis (D_{Ra}/D_{Ri}) im Bereich von 1,8 bis 5,0 liegen. Das Verfahren kann darüberhinaus optimiert werden für Rohre, bei denen das Verhältnis von D_{Ra} zu D_{Ri} größer 1,5 ist, wenn ein Halbzeug eingesetzt wird, dessen Verhältnis von Halbzeugaußendurchmesser D_{Ha} zu Halbzeuginnendurchmesser D_{Hi} im Bereich von 1,5 bis 4,5 liegt.

Insbesondere findet das Verfahren auch Anwendung zur Herstellung eines Rohres für die Fertigung eines optischen Wellenleiters. Hierzu werden Halbzeuge aus hochreinem Quarzglas, insbesondere aus synthetischem Glas, eingesetzt. Die daraus hergestellten Rohre dienen dabei als Hüllrohre, beispielsweise bei der Herstellung optischer Wellenleiter nach der bekannten Stab-in-Rohr-Technik, oder als Substrate in der bekannten MCVD-oder PCVD-Verfahren.

Nachfolgend werden bevorzugte Verfahrensparameter anhand von Ausführungsbeispielen zur Durchführung des erfindungsgemäßen Verfahrens sowie der Aufbau einer entsprechenden

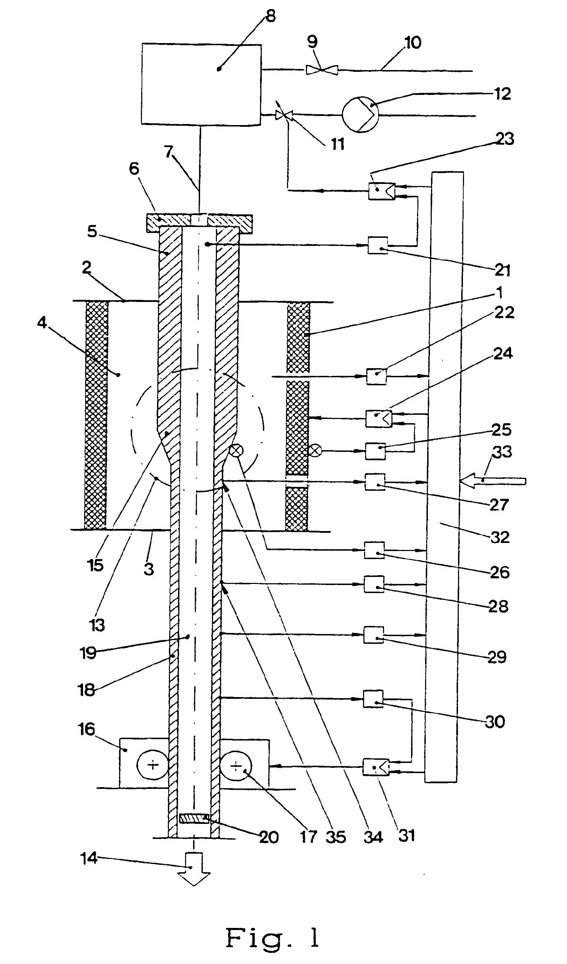

Vorrichtung zur Durchführung des Verfahrens, unter Bezugnahme auf die Zeichnung, beschrieben.

Die Anordnung, um das erfindungsgemäße Verfahren durchzuführen, umfaßt, wie die Figur zeigt, einen vertikal angeordneten Ofen 1 mit einem obenliegenden Ofeneinlaß 2 und einem untenliegenden Ofenauslaß 3. Der innere Heizraum 4 des Ofens 1 ist auf Temperaturen bis oberhalb 2300°C beheizbar.

Als Halbzeug wird ein Quarzglashohlzylinder 5, der an seiner Oberseite mit einem Träger 6 verschlossen ist, über den Ofeneinlaß 2 von der Oberseite, mittels einer geeigneten Führungseinrichtung, in den Ofeninnenraum 4 eingeführt. Der Quarzglashohlzylinder 5 ist hierbei an seinem oberen Ende, mit dem Träger 6 verschlossen, über eine Versorgungsleitung 7 mit einem Prozeßbehälter 8 verbunden, der zum einen, über ein Absperrventil 9 mit einer Inertgasversorgung 10 und zum anderen mit einem regelbaren Ventil 11 mit einer Vakuumpumpe 12 verbunden ist.

Als Halbzeug wird dem Innenraum 4 des Ofens 1 ein Quarzglashohlzylinder 5 zugeführt, darin im Bereich einer Verformungszone 13, die durch einen strichpunktierten Kreis etwa in der Mitte des Ofeninnenraums 4 angedeutet ist, erweicht, so daß sich unter Zug in Richtung des Pfeils 14 eine Ziehzwiebel 15 unter Verjüngung des Wandquerschnitts des Quarzglashohlzylinders 5 ausbildet. Ausgangsseitig des Ofens 1 ist eine Ziehvorrichtung 16 mit Führungsrollen 17 vorgesehen.

Wie in der Figur zu erkennen ist, ist im Bereich des abgezogenen Rohres 18 der Rohrinnenraum 19 bzw. der Innenraum des Quarzglashohlzylinders 5 mittels eines Stopfens 20, wie eines Silikonstopfens verschlossen.

Während des Ziehvorgangs können die Druckverhältnisse im Innenraum 4 des Ofens 1 sowie im Rohrinnenraum 19 bzw. im Innenraum des Quarzglashohlzylinders 5 definiert eingestellt und verändert werden. Hierzu ist ein Druckmeßgerät 21 zur Überwachung des Drucks im Innenraum 19 sowie ein weiteres Druckmeßgerät 22 zur Messung des Drucks im Innenraum 4 des Ofens 1 vorgesehen. Weiterhin sind, wie der Zeichnung zu entnehmen sind, ein Druckregler 23, der das regelbare Ventil 11 ansteuert, ein Temperaturregler 24 zur Regelung der Ofentemperatur, ein Pyrometer 25 zur Messung und Überwachung der eingestellten Ofentemperatur, ein weiteres Pyrometer 26 zur Messung der Temperatur im Bereich der Ziehzwiebel 15, ein Durchmesser-Meßgerät 27 zur Messung des Durchmessers des abgezogenen Rohres 18 unmittelbar im Anschluß an die Ziehzwiebel 15, d.h. innerhalb des Ofenraums 4, ein weiteres

Durchmesser-Meßgerät 28 zur Messung des Durchmessers des abgezogenen Rohres 18 außerhalb des Ofens 1, ein Wanddicken-Meßgerät 29 zur Messung der Wandstärke des abgezogenen Rohres 18 außerhalb des Ofens 1, ein Geschwindigkeits-Meßgerät 30 zur Messung der Ziehgeschwindigkeit des Rohres 18 in Richtung des Pfeils 14, sowie ein Geschwindigkeitsregler 31, der die Ziehvorrichtung 16 ansteuert und damit die Drehgeschwindigkeit der Führungsrollen 17 einstellt, vorgesehen. Alle Regler, Meßgeräte und sonstigen Einrichtungen, wie sie vorstehend angegeben sind, sind mit einer zentralen Prozeßregel- und Steuereinrichtung 32 verbunden. Über die zentrale Prozeßregel- und Steuereinrichtung werden Sollwerte, beispielsweise Rohrabmessungen sowohl des Quarzglashohlzylinders 5 als auch des gewünschten, herzustellenden Rohres 18, der erforderliche Massendurchsatz, usw., eingegeben, wie durch den Eingabepfeil 33 angedeutet ist. Die Meßstellen der ersten Durchmesser-Messung, unmittelbar unterhalb der Ziehzwiebel 15, die durch das Durchmesser-Meßgerät 27 vorgenommen wird, ist nochmals gesondert durch den Pfeil 34 angegeben, während die zweite Meßstelle für das abgezogene Rohr 18, außerhalb des Ofens 1, für das Durchmesser-Meßgerät 28 mit einem Pfeil 35 gekennzeichnet ist.

Wie anhand der Vielzahl der Meß- und Regeleinrichtungen sowie der sonstigen Überwachungseinrichtungen zu erkennen ist, kann die Herstellung eines Rohres 18 mit gewünschten Dimensionen, ausgehend von einem Quarzglashohlzylinder 5, ständig überwacht und neu eingestellt bzw. den Gegebenheiten angepaßt werden.

Als ein typisches Beispiel wurde mit dem Aufbau, wie er vorstehend angegeben ist, ein Rohr 18 hergestellt, das einen Rohraußendurchmesser von 50 mm, einen Rohrinnendurchmesser von 12 mm, d.h. ein Durchmesserverhältnis D_{Ra}/D_{Ri} von 4,17 besaß, wozu als Halbzeug ein Quarzglashohlzylinder 5 eingesetzt wurde, dessen Verhältnis von Außendurchmesser D_{Ha} zu Innendurchmesser D_{Hi} einen Wert von 3,17 hatte. Der Durchsatz betrug in diesem Fall 34 kg/h. Gezogen wurde bei einer Heizraumtemperatur (die Temperatur im Innenraum 4 des Ofens 1) von 2300 °C. Während des Betriebs des Ofens 1 betrug P₂ im Heizraum 4 etwa 1120 mbar. Für die Erzeugung des oben angegebenen Rohrverhältnisses von 4,17 mußte im Rohrinnenraum 19 ein Druck P₁ von 1070 mbar eingestellt werden. Hierzu wurde der Innenraum 19 des Rohres 18 durch die Abdichtung, wie einen Silikonstopfen, 20 am Ende des Rohres 18 verschlossen. Der Innendruck wurde mittels der Vakuumpumpe 12 über ein Ansatzstück, in der Figur der Träger 6, am oberen Ende des Quarzglashohlzylinders 5 erzeugt. Um eventuelle

Druckschwankungen zu dämpfen, ist der Prozeßbehälter 8 als ein Puffer zwischen die Vakuumpumpe 12 und den Quarzglashohlzylinder 5 zwischengefügt.

Nachdem eine gewünschte Länge des Rohres 18 abgezogen ist, kann dieses abgetrennt werden. Hierdurch bricht der Druck im Innenraum 19 kurzzeitig zusammen. Nachdem das Rohrende dann wieder mit der Abdichtung 20 verschlossen ist, kann aufgrund der Druckregelung der Druckverlust innerhalb eines Zeitraums von < 2 Sekunden ausgeglichen werden.

Es hat sich gezeigt, daß innerhalb dieser kurzen Zeitspanne keinerlei negativen Einflüsse auf die Abmessungen des Rohres erkennbar sind, so daß Rohre 18 mit gleichbleibender Wandungsdicke sowie Innen- und Außendurchmesser abgezogen werden können.

Zwei Beispiele von Rohren 18, die aus Quarzglashohlzylindern 5 hergestellt wurden, mit typischen Abmessungen und Betriebsparametern, waren wie folgt:

### Beispiel 1:

Außendurchmesser des Quarzglashohlzylinders D_{Ha} = 162 mm
   Innendurchmesser des Quarzglashohlzylinders D_{Hi} = 48 mm
   Verhältnis D_{Ha}/D_{Hi} = 3,375
Abmessungen des Rohres
   Rohraußendurchmesser (D_{Ra}) = 60 mm
   Rohrinnendurchmesser (D_{RI}) = 15 mm
   Verhältnis D_{Ra}/D_{Ri} = 4
Durchsatz an Quarzglas: 35 kg/h
   Temperatur im Ofeninnenraum 2200 °C
   Druckdifferenz zwischen Druck P₂ im Heizraum und Druck P₁ im Rohrinnern: 30 mbar, wobei P₂ 1090 mbar betrug.

### Beispiel 2:

Außendurchmesser des Quarzglashohlzylinders D_{Ha} = 162 mm
   Innendurchmesser des Quarzglashohlzylinders D_{Hi} = 52 mm
   Verhältnis D_{Ha}/D_{Hi} = 3,116
Abmessungen des Rohres
   Rohraußendurchmesser (D_{Ra}) = 67 mm
   Rohrinnendurchmesser (D_{RI}) = 16 mm
   Verhältnis D_{Ra}/D_{Ri} = 4,188
Durchsatz an Quarzglas: 47 kg/h
   Temperatur im Ofeninnenraum 2300°C
   Druckdifferenz zwischen Druck P₂ im Heizraum und Druck P₁ im Rohrinnern: 15 mbar, wobei P₂ 1090 mbar betrug.

## Patentansprüche

1. Verfahren zur Herstellung eines Rohres aus Quarzglas durch Ziehen aus einem hohlzylindrischen Halbzeug, bei dem das Verhältnis von Außendurchmesser (D_{Ha}) zu Innendurchmesser (D_{Hi}) kleiner ist als das Verhältnis von Außendurchmesser (D_{Ra}) zu Innendurchmesser (D_{Ri}) des zu ziehenden Rohres, indem das Halbzeug im wesentlichen vertikal einer Heizzone zugeführt, darin erwärmt und werkzeugfrei zu dem Rohr unter Bildung eines Übergangsbereichs vom Halbzeug zum Rohr nach unten abgezogen\wird, wobei Durchmesser und Wandstärke des Rohres fortlaufend gemessen und die gemessenen geometrischen Daten des Rohres zur Erzeugung eines Steuersignals verwendet werden, mit dessen Hilfe eine Druckdifferenz eingestellt wird zwischen dem Druck P₁ im Innenraum des Halbzeugs, des Übergangsbereichs und des Rohres, und dem Druck P₂ im Heizraum, der in der Heizzone wenigstens im Übergangsbereich vom Halbzeug zum Rohr und dem ihm benachbarten Rohrbereich geregelt wird, wobei das dem Halbzeug abgewandte Ende des Rohrs während seiner Herstellung verschlossen gehalten wird, und der Druck P₁ im Innenraum des Übergangsbereichs, des Halbzeugs und des Rohres durch geregelte Zufuhr eines Gasstroms in den Innenraum des Halbzeugs, des Übergangsbereichs und des Rohres und mittels einer Saugpumpe auf einem vorberechneten Wert gehalten wird, der kleiner ist als der Wert des Drucks P₂ im Heizraum.

2. Verfahren nach Anspruch 1, **dadurch gekennzeichnet, daß** der Gasstrom vor seiner Einleitung in den Innenraum des Halbzeugs, des Übergangsbereichs und des Rohres über einen als Puffer dienenden mit der Saugpumpe in Verbindung stehenden Behälter, zugeführt wird.

3. Verfahren nach Anspruch 1, **dadurch gekennzeichnet, daß** ein Inertgas in den Innenraum des Halbzeugs, des Übergangsbereichs und des Rohres eingeleitet wird.

4. Verfahren nach Anspruch 1, **dadurch gekennzeichnet, daß** der Druck P₁ auf einem Wert gehalten wird, der 5 bis 200 mbar kleiner ist als der Wert des Drucks P₂.

5. Verfahren nach Anspruch 4, **dadurch gekennzeichnet, daß** der Druck P₁ auf einem Wert gehalten wird, der 10 bis 60 mbar kleiner ist als der Wert des Drucks P₂

6. Verfahren nach Anspruch 1, **dadurch gekennzeichnet, daß** der Druck P₂ auf einem Wert von mindestens 1.000 mbar gehalten wird.

7. Verfahren nach Anspruch 1, **dadurch gekennzeichnet, daß** bei einem zu großen Verhältnis von Rohraußendurchmesser zu Rohrinnendurchmesser (D_{Ra}/D_{Ri}) mittels des Steuersignals ein der Saugpumpe vorgeschaltetes Ventil solange geschlossen wird, bis der Sollwert wieder erreicht ist, und dann das Ventil geöffnet wird.

8. Verfahren nach Anspruch 1, **dadurch gekennzeichnet, daß** aus dem Halbzeug ein Rohr hergestellt wird, dessen Verhältnis von Rohraußendurchmesser (D_{Ra}) zu Rohrinnendurchmesser (D_{Ri}) > 1,5 ist.

9. Verfahren nach Anspruch 8, **dadurch gekennzeichnet, daß** aus dem Halbzeug ein Rohr hergestellt wird, dessen Verhältnis von Rohraußendurchmesser (D_{Ra}) zu Rohrinnendurchmesser (D_{Ri}) im Bereich von 1,8 bis 5,0 liegt.

10. Verfahren nach Anspruch 1 oder 8, **dadurch gekennzeichnet, daß** ein Halbzeug eingesetzt wird, dessen Verhältnis von Halbzeugaußendurchmesser (D_{Ha}) zu Halbzeuginnendurchmesser (D_{Hi}) im Bereich von 1,5 bis 4,5 liegt.

11. Verfahren nach Anspruch 1, **dadurch gekennzeichnet, daß** zur Herstellung eines Rohrs für die Fertigung eines optischen Wellenleiters ein Halbzeug aus hochreinem Quarzglas, insbesondere aus synthetischem Quarzglas, eingesetzt wird.

## Claims

1. A method for producing a tube of quartz glass by drawing from a hollow cylindrical semifinished product, in which the ratio of outer diameter (D_{Ha}) to inner diameter (D_{Hi}) is smaller than the ratio of outer diameter (D_{Ra}) to inner diameter (D_{Ri}) of the tube to be drawn in that the semifinished product is supplied substantially vertically to a heating zone, is heated therein and drawn off downwards without any tools to obtain the tube with formation of a transition area from the semifinished product to the tube, wherein diameter and wall thickness of the tube are measured continuously and the measured geometrical data of the tube are used for producing a control signal with the help of which a pressure difference is set between the pressure P₁ in the interior of the semifinished product, of the transition area and of the tube, and the pressure P₂ in the heating chamber, which is controlled in the heating zone at least in the transition area from the semifinished product to the tube and the tube region adjacent thereto, wherein the end of the tube which is oriented away from the semifinished product is kept closed during its production, and the pressure P₁ in the interior of the transition area, of the semifinished product and of the tube is kept by controlled supply of a gas flow into the interior of the semifinished product, of the transition area and of the tube and by means of a suction pump at a pre-calculated value smaller than the value of pressure P₂ in the heating chamber.

2. The method according to claim 1, **characterized in that** prior to its introduction into the interior of the semifinished product, of the transition area and of the tube the gas flow is supplied via a vessel which serves as a buffer and is in communication with the suction pump.

3. The method according to claim 1, **characterized in that** an inert gas is introduced into the interior of the semifinished product, of the transition area and of the tube.

4. The method according to claim 1, **characterized in that** the pressure P₁ is kept at a value which is 5 to 200 mbar smaller than the value of pressure P₂.

5. The method according to claim 4, **characterized in that** the pressure P₁ is kept at a value which is 10 to 60 mbar smaller than the value of pressure P₂.

6. The method according to claim 1, **characterized in that** pressure P₂ is kept at a value of at least 1,000 mbar.

7. The method according to claim 1, **characterized in that** in the case of an excessively great ratio of outer diameter of the tube to inner diameter of the tube (D_{Ra}/D_{Ri}) a valve which is arranged upstream of the suction pump is closed by means of the control signal for a such a long period of time until the desired value is reached again, and the valve is then opened.

8. The method according to claim 1, **characterized in that** a tube is made from the semifinished product, the tube having a ratio of outer diameter of the tube (D_{Ra}) to inner diameter of the tube (D_{Ri}) of > 1.5.

9. The method according to claim 8, **characterized in that** a tube is made from the semifinished product, the tube having a ratio of outer diameter of the tube (D_{Ra}) to inner diameter of the tube (D_{Ri}) in the range of 1.8 to 5.0.

10. The method according to claim 1 or 8, **characterized in that** a semifinished product is used having a ratio of outer diameter of the semifinished product (D_{Ha}) to inner diameter of the semifinished product (D_{Hi}) in the range of 1.5 to 4.5.

11. The method according to claim 1, **characterized in that** a semifinished product of high-purity quartz glass, particularly of synthetic quartz glass, is used for producing a tube for manufacturing an optical waveguide.

## Revendications

1. Procédé pour la fabrication d'un tube en verre de quartz par tirage à partir d'un produit semi-fini cylindrique creux, où le rapport entre le diamètre externe (D_{Ha}) et le diamètre interne (D_{Hi}) est inférieur au rapport entre le diamètre externe (D_{Ra}) et le diamètre interne (D_{Ri}) du tube à étirer, dans le fait que le produit semi-fini est amené essentiellement verticalement à une zone de chauffage, y est réchauffé et est tiré vers le bas sans outil en formant le tube et en formant une zone de transition entre le produit semi-fini et le tube, le diamètre et l'épaisseur de paroi du tube étant mesurés en continu et les données géométriques mesurées du tube étant utilisées pour la génération d'un signal de commande à l'aide duquel est établie une différence de pression entre la pression P₁ dans l'espace intérieur du produit semi-fini, de la zone de transition et du tube et la pression P₂ dans l'espace de chauffage qui est régulé dans la zone de chauffage au moins dans la zone de transition entre le produit semi-fini et le tube et la zone tubulaire qui lui est voisine, l'extrémité du tube qui est détournée du produit semi-fini étant maintenue fermée pendant la fabrication, et dans l'espace interne de la zone de transition du produit semi-fini et du tube par amenée régulée d'un courant de gaz dans l'espace interne du produit semi-fini, de la zone de transition et du tube, la pression P₁ étant maintenue au moyen d'une pompe d'aspiration à une valeur précalculée, qui est inférieure à la valeur de la pression P₂ dans l'espace de chauffage.

2. Procédé selon la revendication 1, **caractérisé en ce qu'**avant son introduction dans l'espace interne du produit semi-fini, de la zone de transition et du tube le courant de gaz est alimenté par un récipient relié à la pompe d'aspiration servant de tampon.

3. Procédé selon la revendication 1, **caractérisé en ce qu'**un gaz inerte est introduit dans l'espace interne du produit semi-fini, de la zone de transition et du tube.

4. Procédé selon la revendication 1, **caractérisé en ce que** la pression P₁ est maintenue à une valeur qui est comprise entre 5 et 200 mbars et qui est inférieure à la valeur de pression P₂.

5. Procédé selon la revendication 4, **caractérisé en ce que** la pression P₁ est maintenue à une valeur qui est comprise entre 10 et 60 mbars et qui est inférieure à la valeur de pression P₂.

6. Procédé selon la revendication 1, **caractérisé en ce que** la pression P₂ est maintenue à une valeur d'au moins 1000 mbars.

7. Procédé selon la revendication 1, **caractérisé en ce que** pour un rapport trop important entre le diamètre externe de tube et le diamètre interne de tube (D_{Ra}/D_{Ri}), une soupape placée en amont de la pompe d'aspiration reste fermée au moyen du signal de commande jusqu'à ce que la valeur théorique soit atteinte et la soupape est alors ouverte.

8. Procédé selon la revendication 1, **caractérisé en ce qu'**à partir du produit semi-fini, il est fabriqué un tube dont le rapport entre le diamètre externe de tube (D_{Ra}) et le diamètre interne de tube (D_{Ri}) est > 1,5.

9. Procédé selon la revendication 8, **caractérisé en ce qu'**à partir du produit semi-fini, il est fabriqué un tube dont le rapport entre le diamètre externe de tube (D_{Ra}) et le diamètre interne de tube (D_{Ri}) est compris entre 1,8 et 5,0.

10. Procédé selon la revendication 1 ou 8, **caractérisé en ce qu'**il est utilisé un produit semi-fini dont le rapport entre le diamètre externe de produit semi-fini (D_{Ha}) et le diamètre interne de produit semi-fini (D_{Hi}) est compris entre 1,5 et 4,5.

11. Procédé selon la revendication 1, **caractérisé en ce que** pour la fabrication d'un tube dans le but de réalisation d'un guide d'onde optique, il est utilisé un produit semi-fini en verre de quartz hautement pur, en particulier en verre de quartz synthétique.
